# EUROPÄISCHE PATENTSCHRIFT

(11) **EP 1 479 744 B1**
(45) Veröffentlichungstag und Bekanntmachung des Hinweises auf die Patenterteilung: **01.08.2007**
(21) Anmeldenummer: 04008707.4
(22) Anmeldetag: 13.04.2004
(51) Int. Cl.: C09J 101/00, C09J 133/00

(54) **Haftklebstoffe enthaltend Polymere und Siliziumverbindungen**
Pressure sensitive adhesives with polymers and silicon compounds
Adhésifs de contact comprenant des polymères et des composés de silicium

(30) Priorität: 20.05.2003 DE 10323048
(43) Veröffentlichungstag der Anmeldung: 24.11.2004
(73) Patentinhaber: BASF Aktiengesellschaft, 67056 Ludwigshafen (DE)
(72) Erfinder: Aydin, Oral, Dr., 68165 Mannheim (DE); Dragon, Andree, 67346 Speyer (DE); Diehl, Heiko, 67487 St. Martin (DE)

(56) Entgegenhaltungen:
- US-B1- 6 369 153
- DATABASE WPI Section Ch, Week 200041 Derwent Publications Ltd., London, GB; Class A60, AN 1999-591297 XP002291701 & JP 2000 212527 A (DAICEL CHEM IND LTD) 2. August 2000 (2000-08-02)

## Beschreibung

Die Erfindung betrifft einen Haftklebstoff, enthaltend eine wässrige Dispersion eines Polymeren, dadurch gekennzeichnet, dass die Dispersion neben dem Polymeren Siliziumverbindungen, ausgewählt aus polymeren Silicaten, wasserlöslichen Alkalisilicaten (Wasserglas), Silanen und aus den Silanen durch Kondensation erhältlichen Silikonen enthält

Bei Haftklebstoffen ist sowohl eine hohe Klebrigkeit (Tack, Adhäsion) als auch eine hohe Kohäsion, d.h. ein hoher innerer Zusammenhalt in der Klebstoffschicht, gewünscht.

Es ist bekannt, zur Verbesserung der Adhäsion polymere Bindemittel zu verwenden, welche einen Gehalt an Monomeren mit langen Seitenketten haben. Auch werden sogenannte Tackifier zur Verbesserung der Adhäsion zugemischt.

Derartige Maßnahmen verschlechtern jedoch im allgemeinen die Kohäsion.

Aus DE-A 10208843 (PF 53298) ist der Zusatz von Kieselsäure zu strahlenvernetzbaren Polymeren bekannt.

Aufgabe der vorliegenden Erfindung war die Verbesserung der Adhäsion der Haftklebstoffe ohne Einbuße bei der Kohäsion. Insbesondere sollen diese vorteilhaften Eigenschaften auch bei Verklebungen auf unpolaren Ober-flächen erreicht werden.

Demgemäss wurde der eingangs definierte Haftklebstoff gefunden.

Der Haftklebstoff enthält eine wässrige Polymerdispersion. Das in der wässrigen Dispersion dispergierte Polymer ist vorzugsweise durch radikalische Polymerisation von ethylenisch ungesättigten Verbindungen (Monomere) erhältlich.

Das Polymer besteht vorzugsweise zu mindestens 40 Gew.-%, bevorzugt zu mindestens 60 Gew.-%, besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Ethylen, Propylen, Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüber hinaus Phenyloxyethylglykolmono-(meth-)acrylat, Glycidylacrylat, Glycidylmethacrylat, Amino- (meth-)acrylate wie 2-Aminoethyl-(meth-) acrylat genannt.

Als weitere Monomere seien auch vernetzende Monomere genannt.

Besonders bevorzugt besteht das Polymer zu mindestens 40 Gew.-%, insbesondere mindestens 60 Gew.-% und ganz besonders bevorzugt zu mindestens 80 Gew.-% aus C₁-C₂₀-, insbesondere C₁-C₁₀Alkyl(meth)acrylaten.

Die Herstellung der Polymere erfolgt in einer bevorzugten Ausführungsform durch Emulsionspolymerisation, es handelt sich daher um ein Emulsionspolymerisat.

Die Herstellung kann jedoch z.B. auch durch Lösungspolymerisation und anschließende Dispergierung in Wasser erfolgen.

Bei der Emulsionspolymerisation werden ionische und/oder nicht -ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 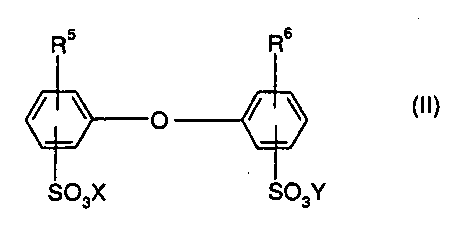 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wässrigen Dispersion verwendet.

Die Glasübergangstemperatur des Polymeren, bzw. des Emulsionspolymerisats beträgt vorzugsweise -60 bis 0°C, besonders bevorzugt -60 bis -10°C und ganz besonders bevorzugt -60 bis -20°C.

Die Glasübergangstemperatur lässt sich nach üblichen Methoden wie Differentialthermoanalyse oder Differentail Scanning Calorimetrie (s. z.B. ASTM 3418/82, sog. "midpoint temperature") bestimmen.

Erfindungsgemäß enthält die wässrige Polymerdispersion Siliziumverbindungen, ausgewählt aus polymeren Silikaten, wasserlöslichen Alkalisilikaten, Silanen und aus den Silanen durch Kondensation erhältlichen Silokonen.

Bei den polymeren Silikaten handelt es sich insbesondere um polymeres Siliziumdioxid wie es durch Kondensation von Kieselsäure oder vorzugsweise wasserlöslichen Alkalisilikaten (Wasserglas) erhältlich ist.

Bei den wasserlöslichen Alkalisilicaten kann es sich z.B. um wässrige Lösungen von Alkalisilikaten, z.B. um Kaliwasserglas (erhältlich durch Auflösen einer Schmelze aus Quarzsand mit (Pottasche) oder um Natronwasserglas (erhältlich durch Auflösen einer Schmelze aus Quarzsand und Soda) handeln.

Bei den Silanen handelt es sich um Siliziumverbindungen mit organischen Substituenten am Siliziumatom.

Bevorzugt sind Silane, die zu Silikonen kondensieren können und dazu insbesondere eine oder mehrere Alkoxygruppen als Substituent am Siliziumatom aufweisen.

Es handelt es sich um Silane mit einem Molgewicht kleiner 1000 g/mol.

Insbesondere handelt es sich um Silane der Formel 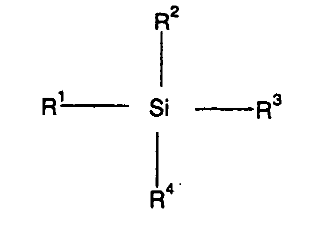 worin R¹ bis R⁴ unabhängig voneinander für einen organischen Rest stehen, mit der Maßgabe, dass mindestens eine der Gruppen R¹-R⁴ für eine Alkoxygruppe, insbesondere eine C₁-C₈-Alkoxygruppe, bevorzugt eine C₁-C₄-Alkoxygruppe steht. Besonders bevorzugt stehen zwei, drei oder alle der Gruppen R¹ bis R⁴ für eine Alkoxygruppe.

Als Alkoxygruppe kommt ganz besonders bevorzugt die Methoxygruppe oder Ethoxygruppe in Betracht.

Die übrigen Gruppen stehen für einen sonstigen organischen Rest, insbesondere einen organischen Rest, der bis zu 20 C-Atome und gegebenenfalls Heteroatom, wie O, N, S enthalten kann. In Betracht kommen insbesondere Alkylgruppen, insbesondere C₁-C₂₀, C₁-C₁₀-Alkylgruppen.

In einer besonders bevorzugten Ausführungsform enthält das Silan neben der Alkoxygruppe mindestens eine weitere hydrophile Gruppe, ausgewählt aus Hydroxy-, Epoxy-, Carboxy-, Mercapto- und Aminogruppen. Vorzugsweise enthalten die Silane neben Alkoxygruppen eine bis vier, insbesondere ein oder zwei der genannten hydrophilen Gruppen.

Bevorzugt sind Aminogruppen, insbesondere primäre oder sekundäre Aminogruppen, besonders bevorzugt primäre Aminogruppen (-NH₂).

Vorzugsweise sind die weiteren hydrophilen Gruppen an die organischen Reste R¹-R⁴ gebunden. Insbesondere handelt es sich dabei um Alkylgruppen, welche durch die hydrophile Gruppe substituiert sind.

Geeignete Verbindungen sind z.B. Mono-, Di- oder Trialkoxysilane, wobei es sich bei den übrigen Resten um organische Gruppen, insbesondere Alkylgruppen handelt, von denen mindestens eine durch eine oder mehrere, z.B. zwei hydrophile Gruppen substituiert ist.

Genannt sei z.B. 4-Amino-3,3-dimethyl-butyltrimethoxysilan.

Als Siliziumverbindungen in Betracht kommen auch Silikone, die durch Kondensation von Silanen, insbesondere der vorstehenden Silane erhältlich sind.

Bevorzugte Siliziumverbindungen sind die wasserlöslichen Alkalisilikate sowie die Silane mit weiteren hydrophilen Gruppen.

Besonders bevorzugt sind die Silane mit weiteren hydrophilen Gruppen.

Es kommen auch Gemische von verschiedenen Siliziumverbindungen in Betracht.

Der Gehalt an den Siliziumverbindungen beträgt vorzugsweise mindestens 0,0001 insbesondere mindestens 0,05, ganz besonders bevorzugt mindestens 0,1 bzw. mindestens 0,5 Gew. teile; der Gehalt an Siliziumverbindungen beträgt vorzugsweise maximal 10 Gew. Teile, besonders bevorzugt maximal 5 Gew. Teile, ganz besonders bevorzugt maximal 3 Gew. teile, bezogen jeweils auf 100 Gew.% des in der Dispersion dispergierten Polymeren.

Die Siliziumverbindungen können der wässrigen Polymerdispersion jederzeit zugesetzt werden. Grundsätzlich können sie auch schon vor oder während der Polymerisation der Monomeren zugegen sein, bevorzugt ist aber der Zusatz nach Abschluss der Polymerisation.

In einer bevorzugten Ausführungsform werden die Siliziumverbindungen zunächst in Wasser vordispergiert und die erhaltene Dispersion der Siliziumverbindungen wird dann zur Polymerdispersion gegeben.

Aus den Alkalisilikaten entstehen dann polymere Silikate und aus den Silanen Silikone. Es wird angenommen, dass die Siliziumverbindungen in der Polymerdispersion letztlich als diskrete Teilchen, insbesondere mit einem Teilchendurchmesser von 5 bis 200 nm, vorzugsweise von 5 bis 100 nm vorliegen.

Der Haftklebstoff kann neben der wässrigen Dispersion des Polymeren weitere Zusatzstoffe enthalten. Der wässrigen Dispersion kann z.B. ein Tackifier, d.h. ein klebrigmachendes Harz, zugesetzt werden. Tackifier sind z.B. aus Adhesive Age, Juli 1987, Seite 19-23 oder Polym. Mater. Sci. Eng. 61 (1989), Seite 588-592 bekannt.

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈-Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäßen Polymerisaten, bevorzugt den wässrigen Dispersionen der Polymerisate zugesetzt werden. Vorzugsweise liegen die Tackifier dabei selber in Form einer wässrigen Dispersion vor.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymerisat. (fest/fest).

Neben Tackifiern können z.B. noch weitere Additive z.B. Verdickungsmittel, vorzugsweise Assoziatiwerdicker, Entschäumer, Weichmacher, Pigmente, Netzmittel oder Füllstoffe bei der Verwendung als Haftklebstoff Verwendung finden. Die erfindungsgemäßen Haftklebstoffe enthalten daher neben der wässrigen Polymerdispersion gegebenenfalls noch Tackifier und/oder die vorstehenden Additive.

Für eine bessere Benetzung von Oberflächen können die Haftklebstoffe insbesondere Benetzungshilfsmittel, z.B. Fettalkoholethoxylate, Alkylphenolethoxylate, Sulfobernsteinsäureester, Nonylphenolethoxylate, Polyoxyethylene/-propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer (fest).

Die Haftklebstoffe eignen sich zur Herstellung selbstklebender Artikel wie Etiketten, Folien oder Klebebänder. Der Haftklebstoff kann durch übliche Methoden, z.B. durch Rollen, Rakeln, Streichen etc. auf Träger, z.B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Insbesondere eignen sich auch Träger mit unpolaren Oberflächen, z.B. aus Polyolefinen, insbesondere Polyethylen oder Polypropylen, da die erfindungsgemäßen Dispersionen darauf gut haften. Das Wasser kann bevorzugt durch Trocknung bei 50 bis 150°C entfernt werden. Die Träger können vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z.B. mit einem silikonisierten Papier, abgedeckt werden.

Die erfindungsgemäßen selbstklebenden Artikel haben sehr gute Klebeeigenschaften, insbesondere eine gute Adhäsion zu den Substraten und eine hohe Kohäsion (innere Festigkeit in der Klebstoffschicht). Diese guten Eigenschaften werden auch erreicht, wenn die Dispersionen, bzw. Haftklebstoffe Benetzungshilfsmittel enthalten. Sie haben auch eine gute Haftung auf unpolaren Oberflächen und eignen sich daher auch besonders für Substrate mit unpolaren Oberflächen, z.B. Polyolefinoberflächen, z.B. Polyethylen (HDPE oder LDPE) oder Polypropylen.

Der Haftklebstoff neigt auch nicht zum Umspulen, d.h. er verbleibt auf dem Träger nach Abziehen z.B. des Etiketts.

Die selbstklebenden Artikel haben auch eine hohe Wasserfestigkeit.

### Beispiele

### Einsatzstoffe:

| | |
|---|---|
| Acronal^{®} A 220 und: | wässrige Dispersion eines Polyacrylats, |
| Acronal V215: | welches als Haftklebstoff angeboten wird (BASF) |
| Lumiten^{®} I-SC: | Benetzungshilfsmittel (Sulfobernsteinsäureester) |

Lumiten® I-SC und Kaliwasserglas bzw. ein Silan wurden dem Acronal® A 220 in den in den Tabellen angegebenen Mengen zugesetzt. Die Gewichtsangaben sind Gew. Teile, bezogen auf 100 Gew.-Teile Polymer.

### Anwendungstechnische Prüfung

Die Haftklebstoffe wurden mit einer Auftragsmenge von 19 bew. 18 g/m² auf Polyethylenfolie oder Papier als Träger beschichtet und 3 Minuten bei 90°C getrocknet.

Anschließend wurde die Schälfestigkeit (Adhäsion) und Scherfestigkeit (Kohäsion) bestimmt.

Der mit Haftklebstoff beschichtete Träger wurde in 25 mm breite Prüfstreifen geschnitten. Zur Bestimmung der Scherfestigkeit wurden die Prüfstreifen mit einer verklebten Fläche von 12,5 x 12,5 mm auf Stahl, bzw. mit einer verklebten Fläche von 25 x 25 mm auf Glas geklebt, mit einer 1 kg schweren Rolle 1 mal angerollt, 10 min gelagert (im Normklima, 50 % rel. Luftfeuchtigkeit 1 bar, 23°C) und anschließend hängend mit einem 1 kg oder 1,5 kg Gewicht belastet (im Normklima). Das Maß für die Scherfestigkeit war die Zeit in Stunden bis zum Abfallen des Gewichts; es wurde jeweils der Durchschnitt aus 5 Messungen berechnet.

Bei der Bestimmung der Schälfestigkeit (Adhäsion) wurde jeweils ein 2,5 cm breiter Prüfstreifen auf einen Prüfkörper aus Polyethylen (HDPE) oder Stahl geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab.

Die Schälfestigkeit wurde 24 Stunden nach der Verklebung bestimmt. Nach dieser Zeit hat sich die Klebekraft voll ausgebildet.

Die Testmethoden entsprechen im wesentlichen den Finat-Testmethoden (FTM) Nr. 1 und Nr. 8.

**Tabelle 1**

| | | |
|---|---|---|
| Auftragsmenge: | 18 g/m² | |
| Träger: | Papier | |

| Haftklebstoff | Schälfestigkeit auf Stahl | Scherfestigkeit auf Stahl |
|---|---|---|
| Acronal® V 215 | | |
| 1 Gew. Teil Lumiten® I SC | 19,5 | 5,3 |
| 1 Gew. Teil Kaliwasserglas* | | |

| Acronal® V 215 | | |
|---|---|---|
| 1 Gew. Teil Lumiten® I SC | 18,7 | 10,4 |
| 2 Gew. Teil Kaliwasserglas* | | |

| Acronal® V 215 | | |
|---|---|---|
| 1 Gew. Teil Lumiten® I SC | 21,2 | 13,0 |
| 3 Gew. Teil Kaliwasserglas* | | |

| | | |
|---|---|---|
| *Betolin K 28, Hersteller Woellner Ludwigshafen | | |

**Tabelle 2**

| | | |
|---|---|---|
| Auftragsmenge: | 19 g/m² | |
| Träger: | Polyethylen | |

| Haftklebstoff | Schälfestigkeit auf Polyethylen | Scherfestigkeit auf Stahl |
|---|---|---|
| Acronal® A 220 | | |
| 1 % Gew. Teil Lumiten® I SC | 5,8 | 16,0 |

| Acronal® A 220 | | |
|---|---|---|
| 1 Gew. Teil Lumiten® I SC | | |
| 0,1 Gew. Teil N-(3-Trimethoxysilyl)propyl)-ethylendiamin | 5,6 | 36,0 |

| Acronal® A 220 | | |
|---|---|---|
| 1 Gew. Teil Lumiten® I SC | 6,9 | 76,0 |
| 0,5 Gew. Teil N-(3-Trimethoxysilyl)propyl)-ethylendiamin | | |

| Acronal® A 220 | | |
|---|---|---|
| 1 Gew. Teil Lumiten® I SC | 7,0 | 94,0 |
| 1 Gew. Teil N-(3-Trimethoxysilyl)propyl)-ethylendiamin | | |

**Tabelle 3**

| | | |
|---|---|---|
| Auftragsmenge: | 19 g/m² | |
| Träger: | Polyethylen | |

| Haftklebstoff | Schälfestigkeit auf Polyethylen | Scherfestigkeit auf Glas |
|---|---|---|
| Acronal® A 220 | | |
| 1 Gew. Teil Lumiten® I SC | 5,8 | 16,0 |

| Acronal® A 220 | | |
|---|---|---|
| 1 Gew. Teil Lumiten® I SC | 6,3 | 67,0 |
| 0,1 Gew. Teil 4-Amino-3,3-dimethylbutyltrimethoxy-silan | | |

| Acronal® A 220 | | |
|---|---|---|
| 1 Gew. Teil Lumiten® I SC | 6,7 | 131,0 |
| 0,5 Gew. Teil 4-Amino-3,3-dimethylbutyltrimethoxy-silan | | |

**Tabelle 4**

| | | |
|---|---|---|
| Auftragsmenge: | 19 g/m² | |
| Träger: | Polyethylen | |

| Haftklebstoff | Schälfestigkeit auf Polyethylen | Scherfestigkeit auf Glas |
|---|---|---|
| Acronal® A 220 | | |
| 1 Gew. Teil Lumiten® I SC | 5,8 | 16,0 |

| Acronal® A 220 | | |
|---|---|---|
| 1 Gew. Teil Lumiten® I SC | 5,7 | 14,0 |
| 0,1 Gew. Teil Tetraethoxysilan | | |

| Acronal® A 220 | | |
|---|---|---|
| 1 Gew. Teil Lumiten® I SC | 5,7 | 12,5 |
| 0,5 Gew. Teil Tetraethoxysilan | | |

| Acronal® A 220 | | |
|---|---|---|
| 1 Gew. Teil Lumiten® I SC | 5,6 | 13,0 |
| 1 Gew. Teil Tetraethoxysilan | | |

## Patentansprüche

1. Haftklebstoff, enthaltend eine wässrige Dispersion eines Polymeren mit einer Glasübergangstemperatur von - 60 bis - 10 °C, **dadurch gekennzeichnet, dass** die Dispersion neben dem Polymeren Siliziumverbindungen, ausgewählt aus polymeren Silicaten, wasserlöslichen Alkalisilicaten (Wasserglas), Silanen mit einem Molgewicht kleiner 1000 g/mol und aus den Silanen durch Kondensation erhältlichen Silikonen enthält

2. Haftklebstoff gemäß Anspruch 1, **dadurch gekennzeichnet, dass** es sich bei den Siliziumverbindungen um wässrige Lösungen von Alkalisilikaten (Wasserglas) handelt.

3. Haftklebstoff gemäß Anspruch 1, **dadurch gekennzeichnet, dass** es sich bei den Siliziumverbindungen um Silane mit Alkoxygruppen handelt, die zu Silikonen kondensieren können.

4. Haftklebstoff gemäß Anspruch 3, **dadurch gekennzeichnet, dass** die Silane neben den Alkoxygruppen hydrophile Gruppen, ausgewählt aus Hydroxy-, Epoxy, Carboxy-, Merkapto- und Aminogruppen enthalten.

5. Haftklebstoff gemäß Anspruch 4, **dadurch gekennzeichnet, dass** es sich bei den hydrophilen Gruppen um Aminogruppen handelt.

6. Haftklebstoff gemäß einem der Ansprüche 1 bis 5, **dadurch gekennzeichnet, dass** der Gehalt an Siliziumverbindungen 0,001 bis 10 Gew. Teile, bezogen auf 100 Gew.-Teile des in der Dispersion dispergierten Polymeren beträgt.

7. Haftklebstoff gemäß einem der Ansprüche 1 bis 6, erhältlich durch Dispergierung der Siliziumverbindungen in der wässrigen Dispersion des Polymeren.

8. Haftklebstoff gemäß einem der Ansprüche 1 bis 7, erhältlich durch Dispergierung der Siliziumverbindungen in Wasser (Vordispergierung) und anschließendem Zusatz der vordispergierten Siliziumverbindungen zur wässrigen Dispersion des Polymeren.

9. Haftklebstoff gemäß einem der Ansprüche 1 bis 9, **dadurch gekennzeichnet, dass** die Siliziumverbindungen in Form von diskreten Teilchen mit einem gewichtsmittleren Teilchendurchmesser von 5 bis 200 Nanometer vorliegen.

10. Haftklebstoff gemäß einem der Ansprüche 1 bis 10, **dadurch gekennzeichnet, dass** das Polymer zu mindestens 40 Gew. % aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

11. Haftklebstoff gemäß einem der Ansprüche 1 bis 11, **dadurch gekennzeichnet, dass** das Polymer zu mindestens 40 Gew. % aus C1 bis C 20 Alkyl(meth)-acrylaten besteht.

12. Haftklebstoff gemäß einem der Ansprüche 1 bis 12, **dadurch gekennzeichnet, dass** es sich bei dem Polymeren um ein Emulsionspolymerisat handelt.

13. Selbstklebende Artikel, insbesondere Etiketten, Klebebänder oder Folien, erhältlich unter Verwendung einer wässrigen Dispersion gemäß einem der Ansprüche 1 bis 12 als Haftklebstoff.

## Claims

1. A pressure sensitive adhesive comprising an aqueous dispersion of a polymer having a glass transition temperature of from -60 to -10°C, said dispersion comprising, besides the polymer, silicon compounds selected from polymeric silicates, water-soluble alkali metal silicates (waterglass), silanes having a molar weight of less than 1000 g/mol, and silicones obtainable from the silanes by condensation.

2. The adhesive according to claim 1, wherein said silicon compounds are aqueous solutions of alkali metal silicates (waterglass).

3. The adhesive according to claim 1, wherein said silicon compounds are silanes having alkoxy groups which can be condensed to silicones.

4. The adhesive according to claim 3, wherein the silanes comprise, besides the alkoxy groups, hydrophilic groups selected from hydroxyl, epoxy, carboxyl, mercapto, and amino groups.

5. The adhesive according to claim 4, wherein said hydrophilic groups are amino groups.

6. The adhesive according to any of claims 1 to 5, containing from 0.001 to 10 parts by weight of silicon compounds per 100 parts by weight of the polymer dispersed in said dispersion.

7. The adhesive according to any of claims 1 to 6, obtainable by dispersing the silicon compounds in the aqueous dispersion of the polymer.

8. The adhesive according to any of claims 1 to 7, obtainable by dispersing the silicon compounds in water (predispersing) and then adding the predispersed silicon compounds to the aqueous dispersion of the polymer.

9. The adhesive according to any of claims 1 to 9, wherein the silicon compounds are in the form of discrete particles having a weight-average diameter of from 5 to 200 nanometers.

10. The adhesive according to any of claims 1 to 10, wherein said polymer is composed of at least 40% by weight of principal monomers selected from C1 to C20 alkyl (meth)acrylates, vinyl esters of carboxylic acids comprising up to 20 carbon atoms, vinylaromatics having up to 20 carbon atoms, ethylenically unsaturated nitriles, vinyl halides, vinyl ethers of alcohols comprising from 1 to 10 carbon atoms, aliphatic hydrocarbons having from 2 to 8 carbon atoms and one or two double bonds, or mixtures of these monomers.

11. The adhesive according to any of claims 1 to 11, wherein the polymer is composed of at least 40% by weight of C1 to C20 alkyl (meth)acrylates.

12. The adhesive according to any of claims 1 to 12, wherein said polymer is an emulsion polymer.

13. A self-adhesive article, especially a label, adhesive tape or sheet, obtainable using an aqueous dispersion according to any of claims 1 to 12 as a pressure sensitive adhesive.

## Revendications

1. Adhésif de contact contenant une dispersion aqueuse d'un polymère avec une température de transition vitreuse de -60 à -10°C, **caractérisé en ce que** la dispersion contient, à côté du polymère, des composés de silicium choisis parmi les silicates polymères, les silicates alcalins solubles dans l'eau (verre soluble), les silanes avec un poids molaire inférieur à 1000 g/mole et les silicones qu'on peut obtenir par condensation à partir des silanes.

2. Adhésif de contact selon la revendication 1, **caractérisé en ce qu'**il s'agit, pour les composés de silicium, de solutions aqueuses de silicates alcalins (verre soluble).

3. Adhésif de contact selon la revendication 1, **caractérisé en ce qu'**il s'agit, pour les composés de silicium, de silanes avec des groupes alcoxy qui peuvent se condenser en silicones.

4. Adhésif de contact selon la revendication 3, **caractérisé en ce que** les silanes contiennent, à côté des groupes alcoxy, des groupes hydrophiles choisis parmi les groupes hydroxy, époxy, carboxy, mercapto et amino.

5. Adhésif de contact selon la revendication 4, **caractérisé en ce qu'**il s'agit, pour les groupes hydrophiles, de groupes amino.

6. Adhésif de contact selon l'une des revendications 1 à 5, **caractérisé en ce que** la teneur en composés de silicium va de 0,001 à 10 parties en poids, sur la base de 100 parties en poids du polymère dispersé dans la dispersion.

7. Adhésif de contact selon l'une des revendications 1 à 6, qu'on peut obtenir par dispersion des composés de silicium dans la dispersion aqueuse du polymère.

8. Adhésif de contact selon l'une des revendications 1 à 7, qu'on peut obtenir par dispersion des composés de silicium dans l'eau (prédispersion) et addition consécutive des composés de silicium préalablement dispersés à la dispersion aqueuse du polymère.

9. Adhésif de contact selon l'une des revendications 1 à 9, **caractérisé en ce que** les composés de silicium sont présents sous forme de particules discrètes ayant un diamètre de particule moyen en poids de 5 à 200 nanomètres.

10. Adhésif de contact selon l'une des revendications 1 à 10, **caractérisé en ce que** le polymère est composé pour au moins 40% en poids desdits monomères principaux sélectionnés parmi les alkyl(méth)acrylates en C₁-C₂₀, les vinylesters d'acides carboxyliques contenant jusqu'à 20 atomes de carbone, les aromatiques de vinyle avec jusque 20 atomes de carbone, les nitriles éthyléniquement insaturés, les vinylhalogénures, les vinyléthers d'alcools contenant de 1 à 10 atomes de carbone, les hydrocarbures aliphatiques avec 2 à 8 atomes de carbone et d'une ou de deux liaisons doubles ou de mélanges de ces monomères.

11. Adhésif de contact selon l'une des revendications 1 à 11, **caractérisé en ce que** le polymère est composé pour au moins 40% en poids d' alkyl(méth)acrylates en C₁-C₂₀ .

12. Adhésif de contact selon l'une des revendications 1 à 12, **caractérisé en ce qu'**il s'agit, pour le polymère, d'un polymère en émulsion.

13. Articles autocollants, en particulier étiquettes, bandes adhésives ou feuilles, qu'on obtient par l'utilisation d'une dispersion aqueuse selon l'une des revendications 1 à 12 sous forme d'adhésif de contact.
